Europäisches Patentamt

European Patent Office

Office européen des brevets

(11) Numéro de publication: **0 325 882**
**A1**

(12) **DEMANDE DE BREVET EUROPEEN**

(21) Numéro de dépôt: 88480075.6

(51) Int. Cl.⁴: **H02G 1/08**

(22) Date de dépôt: **21.11.88**

(30) Priorité: **20.11.87 FR 8716383**

(43) Date de publication de la demande:
**02.08.89 Bulletin 89/31**

(84) Etats contractants désignés:
**AT BE CH DE ES FR GB GR IT LI LU NL SE**

(71) Demandeur: **Baldecchi, Sauro Serge**
**174 Chemin de Gipières**
**F-06370 Mouans Sartoux(FR)**

Demandeur: **Bourgin, Patrick**
**264 Chemin du Fort Carré**
**F-06140 Vence(FR)**

(72) Inventeur: **Baldecchi, Sauro Serge**
**174 Chemin de Gipières**
**F-06370 Mouans Sartoux(FR)**
Inventeur: **Bourgin, Patrick**
**264 Chemin du Fort Carré**
**F-06140 Vence(FR)**

(74) Mandataire: **Hautler, Jean-Louis**
**OFFICE MEDITERRANEEN DE BREVETS**
**D'INVENTION 24 rue Masséna**
**F-06000 Nice(FR)**

(54) **Dispositif pour la mise en oeuvre d'un procédé à dépression pneumatique permettant le tirage des câbles conducteurs dans les gaines.**

(57) Dispositif permettant le tirage des câbles conducteurs dans les gaines.

L'élément mobile est constitué par une "balle" tractice constituée d'une ogive (1) se prolongeant vers le bas par une jupette (2). Ladite ogive (1) se prolongeant axialement par un point d'ancrage (3) muni d'une lumière (4).

La présente invention s'applique aussi bien dans le second oeuvre du bâtiment traditionnel pour la réalisation d'installations électriques, que dans les travaux de génie civil destinés à la pose de câbles dans des gaines souterraines.

FIG. 2

# Dispositif pour la mise en oeuvre d'un procédé à dépression pneumatique permettant le tirage des câbles dans les gaines

La présente invention s'applique aussi bien dans le second oeuvre du bâtiment traditionnel pour la réalisation d'installations électriques, que dans les travaux de génie civil destinés à la pose de câbles dans des gaines souterraines.

Selon le type de câbles ou de conducteurs isolés à poser dans les gaines ou fourreaux de protection, on distingue deux méthodes les plus couramment utilisées :

- Dans les petites installations du type domestique ou industriel, la pose des conducteurs dans les gaines ou conduits nécessite l'action simultanée et conjuguée de deux personnes ; l'une est chargée de tirer sur l'aiguille, alors que la seconde doit guider l'entrée des fils ou câbles pour faciliter la pénétration à l'intérieur desdits conduits.

- Dans les installations destinées à véhiculer soit des petits signaux sur de grandes distances, telles que le réseau téléphonique, soit la puissance du réseau électrique, il est utilisé comme dans le brevet francais n° 2.577.724, un furet métallique équipé de jupes d'étanchéité propulsé par l'air comprimé obtenu à l'aide d'une compresseur de puissance suffisante pour tirer une aiguille ou un filin d'acier sur une grande longueur.

Bien que de nombreux brevets existent concernant des appareils ou machines destinés au tirage des conducteurs dans les installations domestiques, il faut observer que l'on ne trouve pas sur le marché de tels appareils.

Les principaux inconvénients des solutions proposées jusqu'alors ayant été perçus comme étant le poids, la complexité de la mise en service et le prix, une première demande de brevet francais a été déposée par les présents inventeurs, mais soucieux d'obtenir un meilleur rapport qualité/prix, ils ont cherché d'autres solutions faisant appel aux techniques pneumatiques, partant du fait que les électriciens installateurs sont souvent équipés d'un compresseur ou, en simplifiant encore, d'un aspirateur. L'énergie motrice étant ainsi trouvée sous la forme d'un groupe polyvalent, l'amortissement du matériel devient de ce fait encore plus rapide que dans le premier brevet déposé.

Pour pouvoir utiliser l'énergie transmise par un générateur pneumatique, il est nécessaire de créer un moteur, qui dans cet exemple est un moteur linéaire réduit à sa plus simple expression.

Ce moteur doit être capable de tirer le nombre maximum de conducteurs isolés prévus, en fonction du diamètre de la gaine encastrée ou tous types de câbles pouvant être placés dans ladite gaine.

Il est également nécessaire de pouvoir faire suivre, à ces câbles ou conducteurs, les rayons de courbure les plus petits tant que ceux-ci ne provoquent pas un écrasement de la forme intérieure du conduit.

Dans ces conditions, on pouvait supposer que la puissance nécessaire à la traction du pseudo moteur linéaire risquait d'être importante, et donc de nécessiter une pression de l'ordre de plusieurs bars ou une dépression irréalisable.

Or, l'expérience a permis de démontrer, qu'en fait, l'énergie nécessaire dans les conditions les plus difficiles et maximales restait très en dessous des suppositions, et qu'un simple aspirateur d'une puissance inférieure au kilowatt permettait de réaliser l'opération dans de très bonnes conditions.

Cette réalité s'explique par le fait que lorsqu'on tire des conducteurs à l'aide d'une aiguille préalablement placée dans une gaine, l'effort à exercer sur ladite aiguille est déterminé par le nombre total de coudes dans les conduits, car les frottements produits par la tension de l'aiguille ou la tension des conducteurs s'additionnent à tout moment pendant le tirage.

La présente invention comporte donc un élément tracteur que l'on appellera "balle", à cause de sa forme fonctionnelle et qui, attaché directement aux conducteurs, ne produira aucun effet de frottement au départ, ce qui lui permettra d'acquérir une certaine vitesse de glissement et donc de diminuer, par la suite, la résistance due aux frottements.

Par ailleurs, dans le but de réduire le frottement de cette balle tractice dans l'intérieur de la gaine, celle-ci peut être réalisée dans un matériau typiquement autolubrifiant tel que le "nylon" ou le "téflon" (marques déposées).

En outre, l'utilisation d'une dépression, comme moyen de traction de la "balle" permet aussi de réduire les frottements, car seul le contact entre la "balle" et l'intérieur du conduit doit être relativement étanche, alors que dans le cas d'une poussée par la pression de l'air, comme dans certains moyens de traction connus, il est nécessaire d'étanchéiser, aussi, le trou de passage des conducteurs à placer dans la gaine.

De plus, il est observé que la déformation d'un matériau semi-souple tel que le polyéthylène est moins sensible en dépression, qu'en surpression, ce qui est un autre avantage de l'invention.

Par ailleurs, la manipultion du dispositif, objet de l'invention, est simplifiée puisque lorsqu'on utilise ledit dispositif pour tirer des fils conducteurs d'une pièce à une autre, et que l'on ne voit pas l'arrivée de la balle tractice à la sortie de la gaine, l'utilisateur est averti de l'arrivée de celle-ci par le bruit caractéristique que fait l'aspirateur lorsque la charge pneumatique est insuffisante.

Du fait de la présence simultanée de plusiers corps de métier dans un bâtiment en construction, il convient de préciser que l'utilisation d'un aspirateur, selon le procédé, ne présente aucun danger, alors que la projection par air comprimé peut en présenter un, si la pression pneumatique est trop élevée et que l'on ne puisse voir le point de sortie de la balle tractice.

Les caractéristiques essentielles de la présente invention qui permettent de remédier aux inconvénients précités consistent en un procédé qui permet le tirage directement des câbles conducteurs dans des gaines par l'intermédiaire d'éléments mobiles spécifiques se déplaçant par un moyen pneumatique du type aspirateur. Celui-ci est couplé à la gaine par une série d'embouts étanches.

Le dispositif pour la mise en oeuvre d'un procédé permet le tirage directement des câbles conducteurs dans une gaine par l'intermédiaire d'éléments mobiles se déplaçant par des moyens pneumatiques ; le déplacement est obtenu par une dépression pneumatique produite par un aspirateur couplé à la gaine par un ou plusieurs embouts étanches ; l'élément mobile est constitué par une balle tractice constituée d'une ogive se prolongeant vers le bas par une jupette, ladite ogive se prolongeant axialement par un point d'ancrage muni d'une lumière.

La "balle" tractice comporte une tête sphérique reliée à l'ogive par un axe ce qui permet d'établir une seconde circonférence de contact avec l'intérieur du conduit et d'assurer ainsi un meilleur guidage pour les longues lignes droites en supprimant les phénomènes oscillatoires, l'axe de déplacement de la "balle" tractice correspondant exactement à l'axe dudit conduit.

La "balle" tractice comporte une tête hémisphérique.

Le moyen de pression comporte du gaz comprimé, l'embout a une forme en "Y", une partie sert de raccord, une branche permet le passage de l'air comprimé et l'autre branche permet le passage des conducteurs.

Cette série d'embouts spécifiques, et la série de "balles" tractices de forme fonctionnelle, constituent le dispositif de mise en oeuvre du procédé précité, utilisant l'effet de dépression.

Afin d'expliciter l'invention et de faire apparaître d'autres caractéristiques nouvelles, il est donné à titre d'exemple non limitatif un mode de réalisation de l'invention illustré par les dessins ci-annéxés :

FIGURE 1 : Vue en élévation d'une "balle" tractice réalisée suivant l'invention.

FIGURE 2 : Vue en élévation d'une variante de la "balle" tractice destinée aux longues lignes droites.

FIGURE 3 : Vue en élévation d'une variante d'un embout en "Y" destiné à l'utilisation d'air comprimé.

FIGURE 4 : Vue en élévation d'un embout ou manchette d'aspiration pour les gaines de petit diamètre.

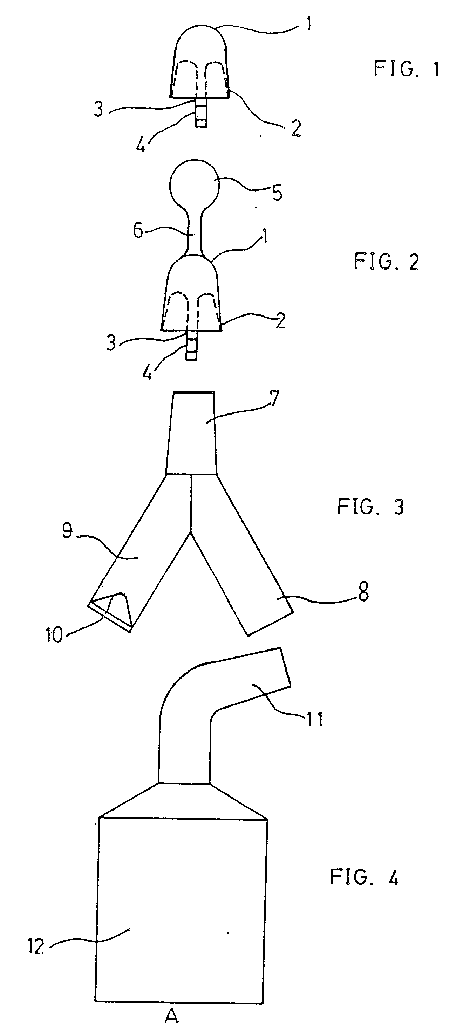

La figure 1 montre, en vue d'élévation, une "balle" tractice, qui est une pièce de révolution réalisée dans un matériau autolubrifiant, elle est constituée d'une ogive 1 de forme arrondie permettant le passage dans les coudes des gaines sans accrochage et avec un minimum de frottement.

Cette ogive 1 se prolonge vers le bas par une jupette 2 destinée à assurer l'étanchéité entre l'ogive 1 et l'intérieur de la gaine (non représentée). Au centre de l'ogive 1, se prolonge axialement le point d'ancrage 3 muni d'un trou 4 en forme de lumière permettant la mise en place simultanée de plusieurs conducteurs ou câbles. Cette pièce est un ensemble monobloc.

La figure 2 est une vue en élévation d'une variante de la "balle" tractice destinée aux longues lignes droites pour assurer un meilleur guidage en supprimant tous phénomènes oscillatoires. Grâce à la présence d'une tête 5 de forme sphérique, on établit une seconde circonférence de contact avec l'intérieur du conduit, et de ce fait l'axe de déplacement de la "balle" tractice correspond exactement à l'axe dudit conduit.

La tête 5 se rattache à l'ogive 1 par un axe 6, la jupette 2, le point d'ancrage 3 dans lequel la lumière 4 est usinée sont en tous points semblabes aux caractéristiques de la figure 1.

La figure 3 représente une vue en élévation d'une variante d'un embout en forme de "Y" destiné à l'utilisation d'air comprimé ; cet embout est réalisé dans un matériau semi-souple ou autolubrifiant afin de réduire les frottements dûs aux désalignements entre la sortie du câble de sa bobine et l'entrée de la gaine, dont le raccord s'effectue par la partie 7. La branche 8 sert à recevoir l'air comprimé, tandis que la branche 9 permet le passage des conducteurs. Cette branche 9 possède à son extrémité un clapet anti-retour 10 qui a pour but d'empêcher une fuite d'air excessive ce qui provoquerait une perte de charge trop grande. Conçu pour être employé dans un procédé utilisant la mise sous pression de gaz comprimé, cet embout répond aux mêmes critères de frottement minimum que le dispositif mettant en oeuvre le procédé de mise en place pneumatique par dépression.

La figure 4 montre en vue d'élévation un embout ou manchette d'aspiration pour les gaines de diamètre plus petit que le diamètre du tube de l'aspirateur. La partie 11 capable de se bloquer de façon étanche dans l'intérieur de la gaine peut être coudée, semi-rigide ou souple par une structure en anneaux.

La partie 12 sert à recevoir l'extrémité habituellement conique d'un tube d'aspirateur destiné à créer une dépression en "A".

## REFERENCES

1. Ogive
2. Jupette
3. Point d'ancrage
4. Trou du point d'ancrage
5. Tête de la "balle"
6. Axe de rattachement
7. Partie du raccord
8. Branche de reception de l'air comprimé
9. Branche pour le passage des conducteurs
10. Clapet anti-retour
11. Partie d'étanchéité
12. Partie pour la réception du tube de l'aspirateur

## Revendications

1. Dispositif pour la mise en oeuvre d'un procédé permettant le tirage directement des câbles conducteurs dans une gaine par l'intermédiaire d'éléments mobiles se déplaçant par des moyens pneumatiques, le déplacement est obtenu par une dépression pneumatique produite par un aspirateur couplé à la gaine par un ou plusieurs embouts étanches, caractérisé par le fait que l'élément mobile est constitué par une "balle" tractice constituée d'une ogive (1) se prolongeant vers le bas par une jupette (2), ladite ogive (1) se prolongeant axialement par un point d'ancrage (3) muni d'une lumière (4).

2. Dispositif selon la revendication 1 caractérisé par le fait que la "balle" tractice comporte une tête sphérique (5) reliée à l'ogive (1) par un axe (6) ce qui permet d'établir une seconde circonférence de contact avec l'intérieur du conduit et d'assurer ainsi un meilleur guidage pour les longues lignes droites en supprimant les phénomènes oscillatoires, l'axe de déplacement de la "balle" tractice correspondant exactement à l'axe dudit conduit.

3. Dispositif selon la revendication 1 caractérisé par le fait que la "balle" tractice comporte une tête hémisphérique.

FIG. 1

FIG. 2

FIG. 3

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| Y | DE-A-2247493 (SCHENK) <br> * page 2, alinéa 3 * <br> * page 3, alinéa 1,2; figure unique * <br> --- | 1 | H02G 1/08 |
| Y | DE-A-1950645 (WOLFF) <br> * page 2, alinéa 4 * | 1 | |
| A | * page 3, alinéa 1; figures 1, 2 * <br> --- | 2,3 | |
| A | FR-A-2102198 (VAN BELLINGHEM) <br> * page 5, ligne 4 - ligne 8; figures 1, 3 * <br> --- | 1 | |
| A | GB-A-2151414 (CHIANG-TENG KAO) <br> * figures 1-3 * <br> ----- | 1,2 | |

DOMAINES TECHNIQUES RECHERCHES (Int. Cl.4 )

H02G

Le présent rapport a été établi pour toutes les revendications

| Lieu de la recherche | Date d'achèvement de la recherche | Examinateur |
|---|---|---|
| LA HAYE | 13 JANVIER 1989 | LOMMEL A. |